Europäisches Patentamt

European Patent Office

Office européen des brevets

(19)

(11) Veröffentlichungsnummer: **0 249 228 B1**

# EUROPÄISCHE PATENTSCHRIFT

(12)

(45) Veröffentlichungstag der Patentschrift:
02.05.91 Patentblatt 91/18

(51) Int. Cl.⁵: **C01F 7/60**

(21) Anmeldenummer: 87108447.1

(22) Anmeldetag: 11.06.87

(54) **Verfahren zur Herstellung von wasserfreiem Aluminiumchlorid.**

(30) Priorität: 13.06.86 DE 3620023

(43) Veröffentlichungstag der Anmeldung:
16.12.87 Patentblatt 87/51

(45) Bekanntmachung des Hinweises auf die
Patenterteilung:
02.05.91 Patentblatt 91/18

(84) Benannte Vertragsstaaten:
CH DE FR GB LI

(56) Entgegenhaltungen:
ULLMANNS ENCYKLOPäDIE DER TECHNI-
SCHEN CHEMIE, 4. neubearbeitete und erweiterte Auflage, Band 7, 1974. VERLAG CHEMIE;
Weinheim/Bergstrasse
ANGEWANDTE CHEMIE, 72. Jahrgang, Nr. 22,
1960, Verlag Chemie GmbH,Weinheim/Berg-
strasse. J. HILLE et al."Herstellung von wasserfreiem Aluminiumchlorid aus y-Tonerde in
der Wirbelschicht" Seiten 850-855
(73) Patentinhaber: BASF Aktiengesellschaft
Carl-Bosch-Strasse 38
W-6700 Ludwigshafen (DE)

(72) Erfinder: Pforr, Gerhard, Dr.
Kirchenstrasse 102
W-6700 Ludwigshafen (DE)
Erfinder: Meyer, Hermann, Dr.
Philosophenplatz 5
W-6800 Mannheim 1 (DE)
Erfinder: Goesele, Wilhelm, Dr.
Mandelring 19
W-6706 Wachenheim (DE)
Erfinder: Stark, Hans, Dr.
Uhlandstrasse 3
W-6712 Bobenheim-Roxheim (DE)

## Beschreibung

Vorliegende Erfindung betrifft ein Verfahren zur Herstellung von wasser freiem Aluminiumchlorid durch Umsetzung von γ-Tonerde mit Kohlenmonoxid und Chlor und/oder Phosgen bei Temperaturen von 400 bis 700°C.

Es ist bekannt, daß man wasserfreies Aluminiumoxid durch Umsetzung von γ-Tonerde mit Chlor und Kohlenmonoxid und/oder Phosgen in einer Wirbelschicht herstellen kann (DE-C-1 061 757 und DE-C-817 457).

Aus Helv. Chim. Acta, 15 (1932). S. 1353-1362 ist es ferner bekannt, daß die Reaktionsgeschwindigkeit sehr stark von der Natur der angewandten Tonerde abhängt, und daß die energiereichere γ-Tonerde schneller reagiert als die energieärmere α-Tonerde, d.h. der totgebrannte Korund ($\alpha$-Al$_2$O$_3$). Nach Helv. Chim. Acta 62 (1979) Seiten 76-84 sind die für die Chlorierung wichtigen Eigenschaften der Tonerden 1) große spezifische Oberfläche, 2) kleiner Restwassergehalt und 3) hohe Defektstrukturenkonzentrationen (d.h. großer Gehalt an χ-Aluminiumoxid) und thermische Stabilität.

Bei den bekannten Verfahren zur Herstellung von wasserfreiem Aluminiumchlorid in einer Wirbelschicht durch Umsetzung von Tonerde mit Kohlenmonoxid und Chlor und/oder Phosgen zeigt sich, daß mit zunehmender Betriebsdauer im Reaktor reaktionsträger Einsatzstoff angesammelt wird und dieser Rückstand den Umsatz beeinträchtigt. Zur Regenerierung des Reaktors muß dieser reaktionsträge Rückstand aus dem Reaktor entfernt werden, was wegen der beteiligten gesundheitsgefährdenden Gase Kohlenmonoxid, Chlor und Phosgen nicht ungefährlich und deshalb nur mit großem technischem Aufwand durchführbar ist. Diese Regenerierung des Reaktors muß auch dann durchgeführt werden, wenn als Ausgangsmaterial die reaktive γ-Tonerde eingesetzt wird.

Bei den Arbeiten, die zu vorliegender Erfindung geführt haben, wurde beobachtet, daß die im Handel erhältlichen γ-Tonerden mit einem Gehalt von ≤ 2 % $\alpha$-Al$_2$O$_3$ im Wirbelbettreaktor ein ganz unterschiedliches Chlorierungsverhalten aufweisen und daß selbst bei konstanten Betriebsbedingungen in unterschiedlich starkem Maße reaktionsträge Rückstände gebildet werden, deren Hauptbestandteil sich als $\alpha$-Al$_2$O$_3$ erwiesen hat. Es zeigte sich ferner, daß bei Einsatz von γ-Tonerden unterschiedlicher Provenienz stark unterschiedliche Raum-Zeitausbeuten erhalten werden.

Der vorliegenden Erfindung lag daher die Aufgabe zugrunde, diese Nachteile bei einem Verfahren zur Herstellung von wasserfreiem Aluminiumchlorid durch Umsetzung von γ-Tonerde mit einem Gehalt von ≤ 2 Gew.% α- Aluminiumoxid in einer Wirbelschicht mit Kohlenmonoxid und Chlor bzw. Phosgen bei Temperaturen von 400 bis 700°C zu vermeiden.

Es wurde gefunden, daß diese Aufgabe dadurch gelöst werden kann, daß man eine γ-Tonerde einsetzt, die mit CuK$_\alpha$-Strahlung ein Röntgendiffraktogramm liefert, dessen Intensität beim Beugungswinkel $2\theta = 42,8° \pm 0,4°$ dividiert durch die Intensität beim Beugungswinkel $2\theta = 45,7° \pm 0,2°$ einen Quotienten ergibt der einen Wert von ≤ 0,38 hat.

Der vorliegenden Erfindung liegt die überraschende Erkenntnis zugrunde, daß der Anteil einer bestimmten Tonerdemodifikation in den eingesetzten γ-Tonerden, ausgedrückt durch den Quotienten aus der Intensität beim Beugungswinkel $2\theta = 42,8° \pm 0,4°$ und der Intensität beim Beugungswinkel $2\theta = 45,7° \pm 0,2°$ möglichst klein sein muß und einen Wert von ≤ 0,38, vorzugsweise von ≤ 0,35 aufweisen soll.

Dem Beugungswinkel $2\theta = 42,82° \pm 0,4°$ der CuK$_\alpha$-Strahlung entspricht gemäß BRAGGscher Gleichung ein d-Wert von ca. 2,11 bis 2,12 Å und dem Beugungswinkel $2\theta = 45,7° \pm 0,2°$ ein d-Wert von ca. 1,98 Å. Nach ASTMKartei Nr. 4-0880 bzw. 13-373 kann die Anwesenheit von chi-Aluminium-(χ) oxiden angenommen werden, wenn die Intensität des Diffraktogramms der CuK$_\alpha$-Strahlung beim Beugungswinkel $2\theta = 42,82° \pm 0,4°$ deutlich über den Untergrund ansteigt. Oie starke Linie im CuK$_d$-Diffraktogramm beim Beugungswinkel $2\theta = 45,7° \pm 0,2°$ (d-Wert ca. 1,98 Å) mit ausgeprägtem Maximum ist nach ASTM-Kartei Nr. 10-425 bzw. 29-0063 mit ausreichender Sicherheit der Tonerdemodifikation γ-Aluminiumoxid zuzuordnen.

Im Röntgendiffraktogramm mit CuK$_\alpha$-Strahlung ist demzufolge die Intensität beim Beugungswinkel $2\theta = 42,8° \pm 0,4°$ mit großer Wahrscheinlichkeit abhängig vom Gehalt an χ-Aluminiumoxid und die Intensität beim Beugungswinkel $2\theta = 45,7° \pm 0,2°$ abhängig vom Gehalt an γ-Aluminiumoxid. Der Quotient dieser Intensitäten zeigt daher die Anwesenheit von (χ) chi-Aluminiumoxiden in γ-Tonerden an.

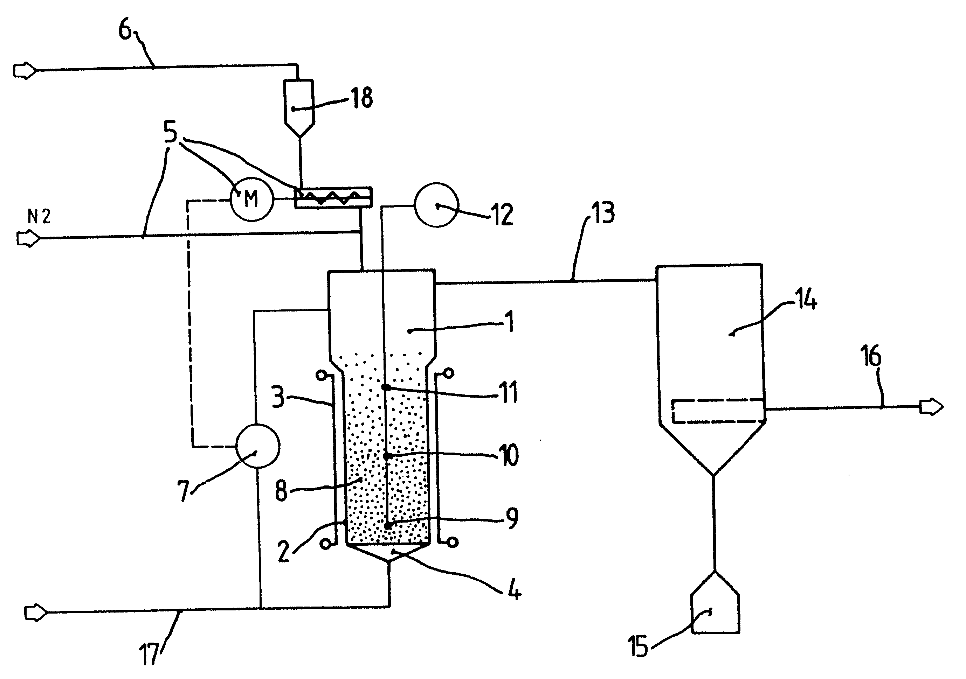

Die Erfindung soll nachfolgend an Ausführungsbeispielen näher beschrieben werden. In der Figur ist der verwendete Chlorierungsreaktor dargestellt.

Der Reaktor (1) besteht aus einem Quarzrohr (2). Nennweite 120 mm mit Elektroheizung (3). Das Quarzrohr (2) erweitert sich oberhalb der Elektroheizung auf Nennweite 200 mm. Die Bauhöhe des Reaktors beträgt 2 260 mm. In den Reaktor (1) wird am Boden über einen geeigneten Gasverteiler (4) durch Leitung (17) das Reaktionsgas CO/Cl$_2$/COCl$_2$ mit ca. 20% phosgengehalt, das vorher aus 1,2 Nm$^3$/h stöchiometrischem Mischgas CO/Cl$_2$ hergestellt worden ist, eingeleitet. Eine stickstoffgespülte

Dosiervorrichtung (5) transportiert aus dem Behälter (18), in den über Leitung (6) Tonerde eingefüllt wird kontinuierlich Tonerde in den Reak tor (1). Die Differenzdruckregelung (7) der Dosiervorrichtung (5) gewahr-leistet konstante Tonerdemenge im Wirbelbett (8) des Reaktors (1) während der Chlorierung. Eine Temperaturregelung hält die Elektroheizung (3) konstant auf 550°C. Die axiale Temperatur des Wirbelbettes (8) wird am Boden (9), in der Mitte (10) und am Ausgang (11), mit der Meßvorrichtung (12) registriert. Leitung (13) transportiert die Reaktionsprodukte und nicht umgesetzten Einsatzstoff in den Kondensator (14). Im Kondensator (14) desublimiert das gasförmige Reaktionsprodukt Aluminiumchlorid. Das feste Produkt Aluminiumchlorid sammelt sich im Behälter (15). Der im Produkt enthaltene Tonerdestaub wird nachträglich abgetrennt. Die Produktionsleistung des Reaktors (1) erreicht bis zu 2,3 kg/h Aluminiumchlorid. Alle chlorhaltigen Bestandteile des durch Leitung (16) abgezo-genen Abgases werden in einer nachgeschalteten Abgasreinigungsanlage vernichtet.

Beispiel 1 (Vergleichsbeispiel)

In den leeren Reaktor wurde γ-Tonerde ($\alpha$-Al$_2$O$_3$-Gehalt < 1 Gew.%) einge-füllt und entsprechend dem Verbrauch kontinuierlich nachdosiert. Die Füllhöhe lag zu Beginn des Versuches im nicht expandierten Zustand des Bettes bei ca. 900 mm. Mit zunehmender Laufzeit der Chlorierung nahm die Füllhöhe bei konstanter Füllmenge ab. Das Röntgendiffraktogramm der eingesetzten γ-Tonerde zeigt folgende Intensitäten :

Beugungswinkel $2^\theta$ = 42,8° ± 0,4°, Intensität J = 252 Impulse
Beugungswinkel $2^\theta$ = 45,7° ± 0,2°, Intensität J = 601 Impulse

woraus sich ein Quotient mit einem Wert von 0,42 ergibt

Die Chlorierung mußte nach 203 Betriebsstunden wegen Kanalbildung im Wirbelbett abgebrochen werden. Oer Wirbelzustand des Bettes war zu Beginn der Chlorierung homogen. Mit zunehmender Laufzeit traten Inhomogenitaten im Wirbelbett auf, die durch nicht wirbelnde Bereiche und inhomogene Temperaturverteilung angezeigt wurden und schließlich zu Kanalbildung führten. Die axiale Reaktortemperatur lag beispielsweise nach ca. 100 Betriebsstunden am Boden des Wirbelbettes bei ca. 600 bis 630°C und in der Mitte sowie am Ausgang des Wirbelbettes bei 700 bis 720°C trotz konstanter Heiztemperatur von 550°C. Die Chlorausbeute erreichte zu Beginn der Chlorierung 80 bis 83%. Kurz vor der Abstellung war die Chlorausbeute auf ca. 50% abgefallen. Die Chlorausbeute errechnet sich aus der pro Zeiteinheit im Produkt gebundenen und dem Reaktor zugeführten Chlormenge.

Nach dem Abbruch der Chlorierung wurde die im Reaktor enthaltene Tonerde analysiert. Die Analyse ergab, daß der Reaktor über 50 Gew.% $\alpha$-Aluminium-oxid enthielt.

Beispiel 2

In den leeren Reaktor wurde γ-Tonerde ($\alpha$-Al$_2$O$_3$-Gehalt < 1 Gew.%) aus einer anderen Produktionscharge eingefüllt und entsprechend dem Verbrauch kontinuierlich nachdosiert. Die Füllhöhe des Reaktors lag während des gesamten Chlorierungsversuches im nicht expandierten Zustand des Wirbelbettes konstant bei ca. 900 mm. Das Röntgendiffraktogramm der eingesetzten γ-Tonerde zeigt folgende Intensitäten :

Beugungswinkel $2^\theta$ = 42,8° ± 0,4°, Intensität J = 219 Impulse
Beugungswinkel $2^\theta$ = 45,7° ± 0,2°, Intensität J = 668 Impulse

woraus sich ein Quotient von 0,33 ergibt
Der Reaktor konnte mit dieser γ-Tonerde betrieben werden, ohne daß Inhomogenitäten des Hirbelzustandes der reagierenden Tonerde auftraten. Auch nach 292 Betriebsstunden war die axiale Temperaturverteilung des Reaktors homogen und lag wie zu Beginn der Chlorierung am Boden, in der Mitte und am Ausgang dem Wirbelbettes bei 580 bis 600°C mit konstanter Heiztemperatur 550°C. Die Chlorausbeute lag im Mittel konstant bei ca. 88%.
Die im Reaktor enthaltene Tonerde wrde nach 292 Betriebsstunden analysiert. Die Analyse ergab, daß der Reaktor weniger als 10% $\alpha$-Aluminium-oxid enthielt.

**Ansprüche**

1. Verfahren zur Herstellung von wasserfreiem Aluminiumchlorid durch Umsetzung von γ-Tonerde mit einem Gehalt von ≤ 2 Gew.% $\alpha$-Aluminiumoxid in einer Wirbelbettschicht mit Kohlenmonoxid und Chlor bzw. Phosgen bei Temperaturen von 400 bis 700°C, dadurch gekennzeichnet, daß man eine γ-Tonerde einsetzt, die mit CuK$_\alpha$-Strahlung ein Röntgendiffraktogramm liefert, dessen Intensität beim Beugungswinkel $2^\theta$ = 42,8° ± 0,4° dividiert durch die Intensität beim Beugungswinkel $2^\theta$ = 45,7° ± 0,2° einen Quotienten ergibt, der einen Wert von ≤ 0,38 hat.

**Claims**

1. A process for the preparation of anhydrous aluminum chloride by reacting γ-alumina containing ≤ 2% by weight of $\alpha$-alumina in a fluidized bed with carbon monoxide and chlorine or phosgene at from 400 to 700°C, wherein the γ-alumina used gives, with Cu-K$_\alpha$ radiation, an X-ray diffraction pattern whose intensity at the diffraction angle $2^\theta$ = 42.8° ± 0.4° divided by the intensity at the diffraction angle $2^\theta$ = 45.7° ±

0.2° is ≤ 0.38.

## Revendications

1. Procédé de préparation de chlorure d'aluminium anhydre par réaction d'alumine γ ayant une teneur ≤ 2% en poids en oxyde d'aluminium α en lit fluidisé avec du monoxyde de carbone et du chlore ou du phosgène à des températures de 400 à 700°C, caractérisé en ce qu'on utilise une alumine γ qui donne avec la raie $CuK_\alpha$ un diagramme de diffraction des rayons X dont l'intensité à l'angle de diffraction $2\theta = 42,8° \pm 0,2°$, divisée par l'intensité à l'angle de diffraction $2\theta = 45,7° \pm 0,2°$, donne un quotient qui a une valeur ≤ 0,38.

EP 0 249 228 B1

6

18

5

M

N 2

12

13

14

1

11

3

10

16

8

9

7

2

4

15

17